# EUROPÄISCHE PATENTSCHRIFT

(11) **EP 0 618 028 B1**
(45) Veröffentlichungstag und Bekanntmachung des Hinweises auf die Patenterteilung: **27.12.1996**
(21) Anmeldenummer: 94104347.3
(22) Anmeldetag: 19.03.1994
(51) Int. Cl.: B23B 29/034

(54) **Vorrichtung mit einem in einem Halter eingespannten und radial verschieblichen Zapfen oder Schaft**
Device with a radially movable shaft or pin clamped in a holder
Dispositif comportant, maintenu dans un support, un embout ou corps cylindrique déplaçable radialement

(30) Priorität: 29.03.1993 DE 9304668 U
(43) Veröffentlichungstag der Anmeldung: 05.10.1994
(73) Patentinhaber: Widia GmbH, 45145 Essen (DE)
(72) Erfinder: Feigenbutz, Werner, D-69181 Leimen (DE)
(74) Vertreter: Vomberg, Friedhelm, Dipl.-Phys.

(56) Entgegenhaltungen:
- EP-A- 0 109 369
- WO-A-91/13715
- DE-C- 79 041
- DE-C- 720 041
- GB-A- 962 210

## Beschreibung

Die Erfindung betrifft eine Vorrichtung mit einem in einem Halter eingespannten und radial verschieblichen Zapfen oder Schaft, insbesondere Schaft eines Werkzeuges oder Werkzeugträgers in einem Werkzeughalter oder eines Lagerzapfens in eine Wandung, die in bezug auf die Längsachse der Vorrichtung eine schräg verlaufende Aufnahmebohrung aufweist, in der eine angepaßte Hülse axial verschiebbar sitzt, deren Außenmantelfläche gleichermaßen schräg verläuft und deren Innenmantelfläche in Form einer Aufnahmebohrung für den Schaft oder Lagerzapfen parallel zur Längsachse der Vorrichtung angeordnet ist, wobei die axiale Verstellung der Hülse eine radiale Verstellung des Schaftes oder Zapfens und somit des Werkzeuges oder Werkzeugträgers ermöglicht und von außen als Klemm- oder Schraubverbindung ausgebildete Spannelemente innerhalb des Halters vorgesehen sind, über die der Schaft oder der Zapfen oder die Hülse arretierbar sind, wobei der Halter im Bereich der Mündung der Aufnahmebohrung stirnseitig eine umlaufende Plananlage aufweist, die sich senkrecht zur Längsachse der Vorrichtung radial erstreckt und wobei die Länge der Hülse um ein der gewünschten axialen Verschiebung entsprechendes Maß kleiner als die Tiefe der Aufnahmebohrung ist, so daß die Hülse im Halter ohne axiale Verstellung des eingespannten Teiles verstellbar ist.

Eine solche Vorrichtung wird in der WO 91/13715 beschrieben. Hierbei weist der Schaft oder der Lagerzapfen einen umlaufenden Absatz in Form eines ringförmigen Flansches oder Ringbundes auf, der eine plane Oberfläche besitzt, mit der der Absatz auf der Plananlage des Werkzeugträgers aufliegt.

Durch den exzentrischen Einbau von mit Wendeschneidplatten bestückten Bohrern in eine Werkzeugaufnahme eines Werkzeughalters können mit ein und demselben Bohrer eines bestimmten Durchmessers Bohrungen mit unterschiedlichen Durchmessern gefertigt werden.

Eine Möglichkeit besteht darin, den Werkzeug- oder Werkzeugträgerschaft in einem quer zur Längsachse des Werkzeugträgers verschiebbaren Schlitten einzuspannen, der beispielsweise über eine Verstellspindel in radialer Richtung bewegt wird. Der Nachteil dieser Ausführungsform besteht in der geringen Steifigkeit, einer zwangsläufigen Unwucht bei rotierenden Werkzeugen und dem relativ aufwendigen Aufbau, der hohe Herstellkosten verursacht.

Durch die DE-PS 79041 ist ein Werkzeughalter bekanntgeworden, der zur Höhenverstellung des in einer exzentrischen und zur waagerechten Längsachse geneigten Durchbohrung eines im Werkzeughalter drehbaren und feststellbaren Futters angeordnet ist. Durch das Drehen des Futters wird eine geringfügige Höhenverstellbarkeit erreicht. Der Nachteil dieses Werkzeughalters besteht darin, daß die Höhenverstellbarkeit des Werkzeuges nur geringfügig ist und daß das Werkzeug bei Drehen des Futters aufgrund der Exzentrizität auf einer Kreisbahn mitgenommen wird und sich somit Anstellwinkel und Anschneidwinkel des Werkzeuges zum Werkstück ändern.

Die EP 0 109 369 A2 betrifft eine ähnliche Halterung eines Werkzeugträgers, der eine Exzenterhülse aufweist, in der das Werkzeug drehbar angeordnet ist. Zum einen ist mit einer derartigen exzentrischen Halterung ebenfalls nur eine geringe Höhenveränderung möglich, zum anderen wandert auch hier das Werkzeug bei Verstellen auf einem Kreisbogen.

Durch die DE-U1 83 05 158.9 ist eine Vorrichtung zur Halterung eines rotierend antreibbaren Drehstahles bekannt geworden, bei der auf einen Werkzeughalter eine Hülse aufgesetzt ist, die eine schräge Bohrung aufweist, in der ein Zylinder verschieblich und arretiertbar angeordnet ist. Der Zylinder weist in Richtung der Längsachse des Werkzeughalters und der Hülse eine Bohrung zur Aufnahme eines Werkzeugträgers auf, so daß die Bohrung den Zylinder schräg durchsetzt. Durch die Hülse unterhalb des Zylinders ist eine Arretierschraube angeschraubt, die in eine Gewindebohrung am Ende des Werkzeugträgers einzugreifen imstande ist. Bei Verschieben des Zylinders innerhalb der Aufnahmebohrung der Hülse und bei gelöster Arretierung des Werkzeugträgers wandert dieses auf einer Linie in Richtung der durch die Aufnahmebohrung vorgegebenen schrägen Ebene. Jedoch ist die Fixierung des Werkzeugträgers nicht ausreichend. Beim Klemmen des Zylinders mittels der Arretierschraube wird der Werkzeugträger innerhalb des Körpers verkeilt, aufgrund der Tatsache, daß das untere Ende des Werkzeugträgers gehaltert ist. Bei starker Belastung des Werkzeuges kann diese Art der Halterung zum Flattern führen; darüber hinaus wird der Werkzeugträger in der Halterung auf Biegung beansprucht.

Durch die DE 16 27 078 A1 ist eine ähnliche Schneidwerkzeuganordnung, wie die eben beschriebene bekanntgeworden, mit einer in einer schrägen Bohrung eines Werkzeughalters angeordneten Hülse, die längs der Achse des Werkzeughalters von einer Bohrung durchsetzt ist, zur Aufnahme eines Werkzeugträgers in die Hülse. In eine parallele, die schräge Bohrung des Werkzeughalters anschneidende Gewindebohrung ist eine Mitnehmerschraube geschraubt, deren Kopf zur Höhenverstellung der Hülse in eine Nut derselben eingreift. Obwohl der Werkzeugträger mittels die schräge Hülse durchgreifende Arretierschrauben arretiert ist, ist eine ausreichende Steifigkeit und Stabilität des Werkzeugträgers, insbesondere bei hohen Belastungen, nicht gegeben, weil die Verstellschraube einen Bohrkanal bedingt und in diesem Bereich die Hülse und der Werkzeugträger keine ausreichende Fixierung erfahren. Zudem wird der Werkzeugträger durch die Arretierschrauben gerade in Richtung zur schwächsten Materialstelle in Richtung des Bohrkanales der Verstellschraube gedrückt.

Erst die in der genannten WO 91/13715 beschriebene Vorrichtung kann die Aufgabe lösen, einen Werkzeugträger bei gedrungener Bauweise mit einer radialen Verstellmöglichkeit auszustatten, andererseits gegenüber zentrisch eingespannten, massiven Werkzeugträgern bzw. Wellen oder Walzen keine Einbußen an Steifigkeit und Stabilität in Kauf nehmen zu müssen. Insbesondere wird bei der radialen Verstellung des Werkzeuges die Anschnittebene des Werkzeuges nicht verändert. Der Nachteil der genannten Vorrichtung liegt darin, daß Radialverstellungen nur in einer Richtung möglich sind, was insbesondere bei Vollhartmetallwerkzeugen zu Problemen führen kann, die hochgenau ausgerichtet werden müssen.

Es ist daher Aufgabe der vorliegenden Erfindung, die eingangs genannte Vorrichtung dahingehend weiterzuentwickeln, daß eine radiale Verstellung in allen Richtungen möglich ist.

Diese Aufgabe wird durch die im Anspruch 1 beschriebene Vorrichtung gelöst, die erfindungsgemäß dadurch gekennzeichnet ist, daß in der Hülse eine Exzenterhülse mit einem zylindrischen Außenmantel mit einer exzentrisch angeordneten Bohrung zur Aufnahme des Schaftes oder Lagerzapfens angeordnet ist.

Exzenterhülsen an sich sind nach dem Stand der Technik bekannt und ermöglichen je nach Drehwinkeleinstellung unterschiedliche radiale Einstellungen des dort gelagerten Werkzeuges. Diese Möglichkeit wird in Verbindung mit der weiteren zusätzlichen radialen Einstellmöglichkeit über die erste Hülse dazu ausgenutzt, in jeder radialen Richtung die maßgenaue Ausrichtung zu bewirken. Dies ist insbesondere bei Vollhartmetallwerkzeugen oder Reibahlen von großer Bedeutung, da diese Werkzeuge keine hohe Biegeelastizität haben, so daß bei ungenauer radialer Einstellung ein Werkzeugbruch drohen würde.

Ausführungsbeispiele der Erfindung sind in den Unteransprüchen 2 bis 20 beschrieben.

So trägt die Exzenterhülse an ihrem vorderen Ende eine Morsekegel, dessen rückwärtige Ringbundfläche plan auf der ringförmigen Plananlage im Bereich der Mündung der Aufnahmebohrung aufliegt.

Die Bohrung der Exzenterhülse wird bis zu 3/10 mm, vorzugsweise um 5/100 mm gegen die Exzenterhülsenachse versetzt angeordnet.

Die Bohrung der Exzenterhülse kann konisch oder zylindrisch ausgebildet sein, je nach Aufnahme des Werkzeugschaftes, der beispielsweise mittels einer Spannzange gespannt werden kann.

Nach einer weiteren Ausgestaltung der Erfindung weist die Exzenterhülse an ihrem Außenmantel eine Ringnut auf, in die eine Spannschraube oder deren kegelförmige Spitze eingreift und die Exzenterhülse mit dem Halter verspannt, wobei die Spannschraube in einer Gewindebohrung des Halters geführt ist. Die Ringnut ermöglicht jede beliebige Drehwinkeleinstellung der Exzenterhülse. Alternativ hierzu kann der Morsekegel der Exzenterhülse mindestens eine axiale Durchbrechung, vorzugsweise mehrere Durchbrechungen, zum Durchgriff jeweils einer Spannschraube aufweisen, die jeweils in einer korrespondierenden Gewindebohrung des Halters geführt ist, die senkrecht zu dessen ringförmiger Plananlage angeordnet ist.

Nach einer weiteren Ausführungsform kann die Exzenterhülse mindestens eine radial durch ihren Mantel oder axial durch den Morsekegel reichende Gewindebohrung aufweisen, in der eine Spannschraube zum Verspannen des in die Exzenterhülse eingespannten Schaftes oder des Lagerzapfens geführt ist.

Vorteilhaft kann der Neigungswinkel der Aufnahmebohrung des Halters und des Außenmantels der Hülse in bezug zur Längsachse der Vorrichtung bis zu 80° betragen. Gleichermaßen kann der Neigungswinkel zwischen der Aufnahmebohrung der Aufnahmehülse und der Längsachse der Vorrichtung zwischen 2 und 10° betragen.

Die erfindungsgemäße Vorrichtung besitzt den hervorstechenden Vorteil, daß ein Werkzeugträger innerhalb eines Werkzeughalters radial um eine relativ große Strecke verstellt werden kann, daß dabei jedoch die Steifigkeit, Stabilität und Standfestigkeit des Werkzeughalters und des Werkzeugträgers keine Einbußen erleiden, sondern auch unter extremen Belastungen eine hohe Steifigkeit und Stabilität beibehalten, die mit denjenigen von nicht radial verstellbaren Werkzeugträgern vergleich ist. Die Kombination der radialen Verstellbarkeit mit einer extremen Steifigkeit des Werkzeugträgers hat des weiteren den integralen Vorteil, daß bei einer derartigen Vorrichtung bei radialer Verstellung des Werkzeugträgers der Schneidwinkel des Werkzeuges nicht verändert wird.

Der Halter kann ein Werkzeughalter mit einer Aufnahmehülse sein, in deren Wandung wenigstens eine Gewindebohrung angeordnet ist, in deren Bereich die Hülse eine Durchbrechung in Form eines Längsschlitzes besitzt, durch die eine in die Gewindebohrung geschraubte Spannschraube hindurchzugreifen imstande ist.

Die Gewindebohrung kann dabei um einen geringeren Winkel aus der Horizontalen geneigt sein, so daß eine in die Gewindebohrung und die Ringnut geschraubte Spannschraube die Exzenterhülse in die Aufnahmehülse zieht und den Ringbund der Exzenterhülse auf die Plananlage der Aufnahmehülse aufzupressen imstande ist. Diese Maßnahme ermöglicht es in vorteilhafter Weise, daß beim Spannen der Exzenterhülse mittels des Spannelementes, welches mit einer kegelig ausgeführten Spannspitze versehen ist, zusätzlich eine axiale Spannkraft die Exzenterhülse an die Planfläche des Werkzeughalters drückt. Nach gewählter axialer Lage der Hülse wird jeweils die Spannschraube bzw. werden die Spannschrauben durch die Durchbrechungen der Hülse hindurchgesteckt und so weit festgezogen, bis die Exzenterhülse an der gegenüberliegenden Hülsenmantelinnenseite ebenso wie die Hülsenmantelaußenseite an der Aufnahmebohrung kraftschlüssig anliegen. Dann pressen auch die zugeorndeten Planflächen der Exzenterhülse und des Werkzeughalters reibschlüssig aufeinander und bewirken die hohe Steifigkeit der Vorrichtung.

Des weiteren kann die Hülse endseitig in Richtung der Längsachse der Vorrichtung ein Außengewinde aufweisen, das in ein Innengewinde eine relativ zur Aufnahmebohrung axial fixierbaren Verstellmutter eingreift. Diese kann als Glocke ausgebildet sein, die mittig von einer Spannschraube durchgriffen ist, deren Gewindeschaft in eine zentrische Gewindebohrung des Lagerzapfens zu dessen Fixierung eingreift, dergestalt, daß der ringförmige Flansch der Exzenterhülse auf die Plananlage der Wandung aufzupressen imstande ist.

Zur axialen Verstellung der Hülse kann ein von außen betätigbares Verstellelement vorgesehen sein, das innerhalb des Werkzeughalters angeordnet ist; das Verstellelement kann innerhalb der Wandung der Aufnahmehülse des Werkzeughalters angeordnet sein. Das Verstellelement kann ein vorzugsweise mit einer Skalierung versehenes Spiralrad aufweisen, das einen Stift zu betätigen imstande ist, der in eine Sackbohrung innerhalb der Hülse eingreift. Ebenso kann das Spiralrad über einen Innensechskant betätigbar sein.

Das Verstellelement kann aus einem Gewindering und einem Gewindestück bestehen, wobei der Gewindering den Werkzeughalter in einer Ringnut liegend umfaßt und dessen Innengewinde in ein Außengewinde des durch eine Durchbrechung der Hülse ragendes Gewindestück greift, das formschlüssig mit der Hülse verbunden ist. Vorzugsweise durchgreift das Gewindestück einen Längsaxialschlitz des Werkzeughalters.

Die Exzenterhülse kann als Lagerzapfen mit einem Sackloch zur Aufnahme eines Schaftes oder einer Welle ausgebildet sein.

Je nach der relativen axialen Lage der Hülse in bezug auf die Aufnahmebohrung kann die durch die Hülse aufgenommene Exzenterhülse mehr oder weniger in axialer Richtung eingespannt werden. Um zu ermöglichen, daß ein und dieselbe Hülse in axialer Richtung eine Vielzahl einstellbarer Stellungen in der Aufnahmebohrung einnehmen kann, ist die Länge der Hülse - je nach der gewünschten axialen Verschiebung - um ein entsprechendes Maß kleiner als die Tiefe der Aufnahmebohrung des Werkzeughalters.

Die Durchbrechungen der Hülse können als Axialschlitz und die betreffenden Ausnehmungen der Exzenterhülse als Sacklöcher ausgebildet, wodurch sich eine stufenlose radiale Verstellmöglichkeit ergibt.

Um die radiale Verstellbarkeit zu vereinfachen, kann weiterhin vorgesehen sein, zur axialen Verstellung der Hülse ein von außen betätigbares Verstellelement vorzusehen, das im Werkzeughalter angeordnet ist. Dieses Verstellelement dient bei gelösten Spannschrauben über entsprechende Verstellelemente zur axialen Ausrichtung der Hülse. Ist die Ausrichtung durchgeführt, wird die Verspannung der Hülse in beschriebener Weise über Spannschrauben herbeigeführt. Im einfachsten Fall besitzt das Verstellelement ein mit einer Skalierung versehenes Spiralrad, das einen Stift betätigt, der in einer Sackbohrung des Hülsenaußenmantels eingreift. Als robust hat sich ein Innensechskant erwiesen, über den das Spiralrad betätigt wird.

Um ein sehr genaues (spielfreies) Erkennen der Verstellgröße zu ermöglichen, wird eine einem Langloch ähnliche Ausnehmung am Werkzeugschaft bzw. Werkzeugträgerschaft ausgeführt, wobei eine Längsseite auf einer Abschrägung einen Nonius und die Hülse an der entsprechenden Stelle eine Skalierung erhält.

Um eine Feinjustierung, z.B. eines Walzenspaltes zwischen zwei nebeneinanderliegenden Walzen, zu ermöglichen, kann der Zapfen als Lagerzapfen für eine Walze auszubildet sein.

Im folgenden wird die Erfindung anhand von Ausführungsbeispielen darstellenden Zeichnungen erläutert. Es zeigen
- Fig. 1: eine Explosionsdarstellung der Vorrichtung aus Werkzeughalter mit Hülse, Exzenterhülse und Werkzeugschaft,
- Fig. 2: eine vergrößerte Darstellung des Werkzeughalters mit Hülse,
- Fig. 3a, 3b: eine entsprechende Vorrichtung wie Fig. 2 mit einem andersartigen Verstellelement,
- Fig. 4: eine Seitansicht der Exzenterhülse,
- Fig. 5 und 6: jeweilige Draufsichten auf die Exzenterhülse von oben und von unten und
- Fig. 7: einen radial verschiebbaren Lagerzapfen zur endseitigen Aufnahme eines Schaftes, einer Welle oder einer Walze.
- Fig. 8a, 8b: eine weitere Ausführungsform der erfindungsgemäßen Vorrichtung.
- Fig. 9a, b: eine alternative Ausführungsform einer Exzenterhülse.

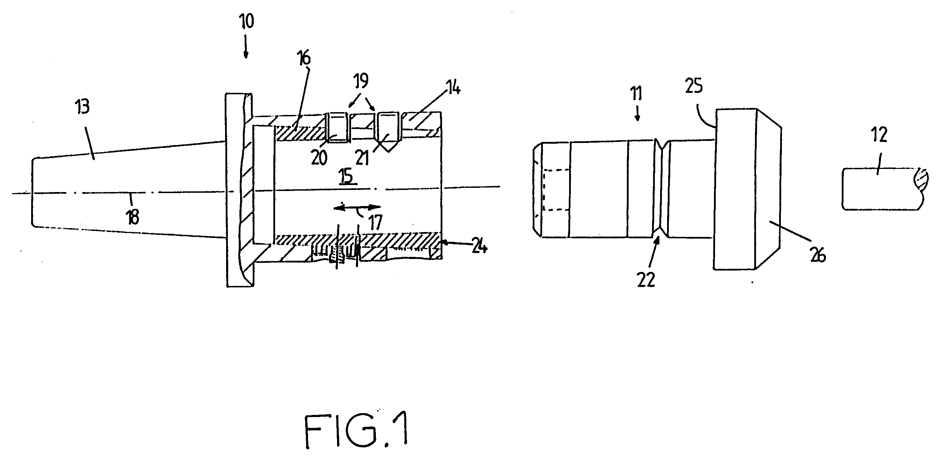

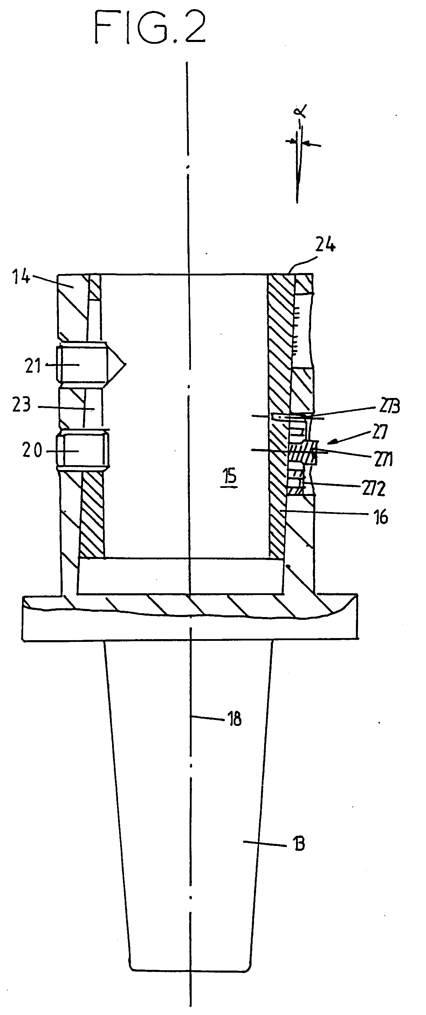

Fig. 1 zeigt in einer Explosionsdarstellung einen Werkzeughalter 10, eine Exzenterhülse 11 sowie einen Schaft 12 eines Hartmetallvollbohrers. Der Werkzeughalter 10 ist im einzelnen in der WO 91/13715 beschrieben, so daß hierauf verwiesen werden kann. Er besteht im wesentlichen aus einem Kegelschaft 13 und besitzt an seinem vorderen Ende eine Aufnahmehülse 14, die eine Aufnahmebohrung 15 umschließt, in der eine schrägzylindrisch geformte Hülse 16 eingelegt ist. Der Außenmantel der Hülse 16 und der Innenmantel der Aufnahmebohrung 10 sind gleichgerichtet und liegen umlaufend aneinander, daß im unverspannten Zustand eine axiale Bewegung der Hülse 16 in Richtung des Doppelpfeiles 17 möglich ist. Die durch den Innenmantel der Hülse 16 umschlossene Durchgangsbohrung verläuft parallel der Längsachse 18. Die Hülse 16 besitzt Gewindebohrungen 19, in denen Spannschrauben 20 bzw. 21 eingeschraubt sind. Die Spannschraube 21 läuft an ihrem Spannende spitzkonisch zu und greift im verspannten Zustand in die Ringnut 22 der Exzenterhülse 11 ein. Die Exzenterhülse kann somit in der Aufnahmebohrung 15 der Hülse 16 verspannt werden. Wie insbesondere aus Fig. 2 ersichtlich, ermöglicht die schlitzförmige Durchbrechung 23 in axialer Richtung ein Durchführen der Spannschrauben 20 und 21. Der Längsschlitz 23 dient gleichzeitig als Anschlagbegrenzung, um ein Herausfallen der Hülse 16 zu vermeiden. Gleichzeitig ist hierdurch eine Verdrehsicherung gegeben, die ein unkontrolliertes Verstellen der Hülse 16 in radialer Richtung verhindert, so daß sich die Position der Exzenterhülse 11 bzw. des Schaftes 12 in radialer Richtung nicht ändert. Die Aufnahmebohrung 15 ist nicht konzentrisch in Richtung der Längsachse 18 der Vorrichtung gerichtet, sondern in bezug auf diese Längsachse um einen Winkel α geneigt, somit schrägzylindrisch. Der Neigungswinkel α, den die Aufnahmebohrungsinnenwand mit einer Parallelen zur Längsachse 21 bildet, beträgt im vorliegenden Fall etwa 4°, kann jedoch den Bedürfnissen entsprechend ausgeführt sein.

Die Aufnahmehülse 16 besitzt stirnseitig eine umlaufende Planfläche 24, die im verspannten Zustand an der rückwärtigen Ringbundfläche 25 des Morsekegels 26 der Exzenterhülse anliegt. Die Plananlage wird auch bei Verstellung der Hülse 16 nicht verlassen, da die Hülse 16 im Halter 10 ohne axiale Verstellung der Exzenterhülse 11 verschoben werden kann. Die Gewindebohrung 19 für die Spannschraube 21 kann um einen kleinen Winkel aus der Senkrechten in bezug auf die Längsachse der Vorrichtung geneigt sein, so daß beim Anziehen der Spannschraube 21 die Exzenterhülse 11 nach innen in die Aufnahmebohrung 15 des Werkzeughalters 10 gezogen wird. In jedem Falle führt ein Festschrauben der Spannschrauben 20 und 21 dazu, daß der Exzenter 11 innerhalb der Hülse 16 fest verspannt wird. Dadurch, daß sowohl die Aufnahme 15 exzentrisch angeordnet ist wie auch die Innenbohrung der Exzenterhülse 11, ist es möglich, den Werkzeugschaft 12 oder einen Werkzeugträgerschaft in beliebiger radialer Richtung zu verschieben.

Zur einfacheren Verstellbarkeit der Hülse 16 im gelösten Zustand ist ein Verstellelement 27 vorgesehen, daß ein Spiralrad 272 aufweist, das über einen Innensechskant 271 betätigbar ist. Durch Drehung des Innensechskantes 271 wird ein Stift 273 in axialer Richtung nach oben bzw. nach unten bewegt, wobei dieser Stift 273, der in einer entsprechenden Sackbohrung der Hülse 16 einliegt, die Hülse mitnimmt.

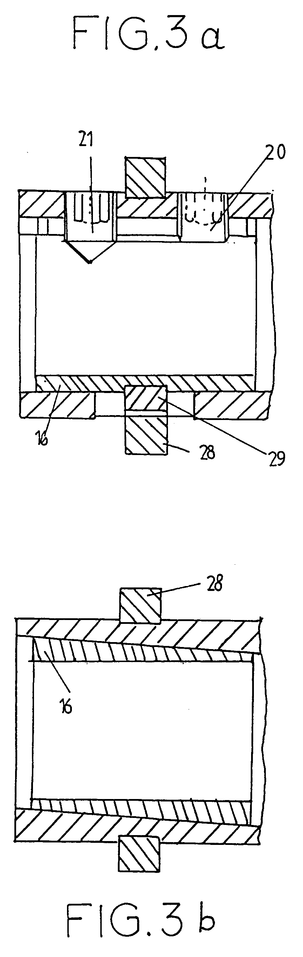

In einer entsprechend aufgebauten Vorrichtung wird bei der Ausführungsform nach Fig. 3a und 3b das Verstellelement auf einem Gewindering 28 und einem Gewindestück 29 gebildet. Der Gewindering 28 liegt in einer Ringnut der Exzenterhülse 11, umfaßt diese und greift mit seinem Innengewinde in ein entsprechendes Außengewinde des Gewindestückes 29 ein, das formschlüssig mit der Hülse 16 verbunden ist. Das Gewindestück 29 durchgreift einen Längsschlitz des Werkzeughalters.

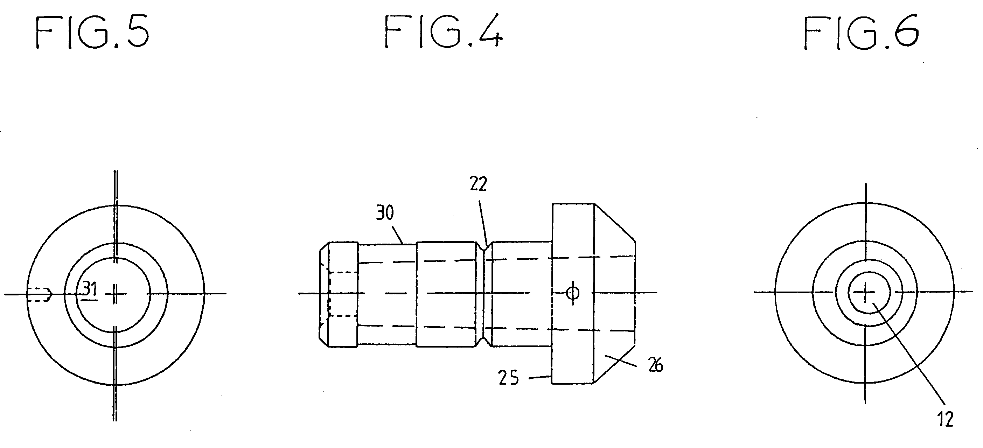

Vergrößerte Ansichten der Exzenterhülse 11 stellen die Fig. 4 bis 6 dar. Die Exzenterhülse 11 besitzt einen Schaft 30 mit einer Ringnut 22, wobei der Schaftbereich 30 auch weitere abgesetzte Ringausnehmungen bzw. vorstehende Bunde haben kann. Die Exzenterhülse 11 trägt an der Vorderseite einen Morsekegel 26 und besitzt eine exzentrisch angeordnete Bohrung 31 zur Aufnahme des Schaftes 12 oder eines Lagerzapfens. Die Bohrung 31 der Exzenterhülse 11 ist bis zu 3/10 mm aus der axialen Mittellage versetzt. Die Schaftaufnahme kann, wie aus Fig. 4 bis 6 ersichtlich, auch konisch ausgebildet sein.

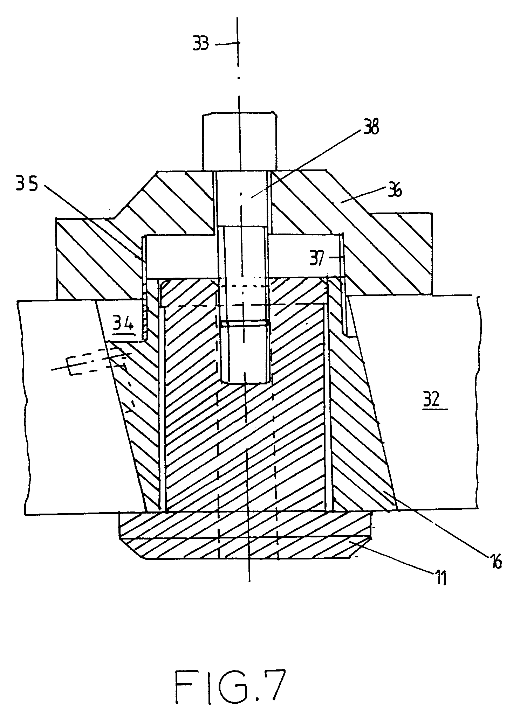

In Fig. 7 ist die Exzenterhülse 11 in die Hülse 16 einer Wandung 32 eingesetzt, die von einer in bezug auf die Längsachse 33 schräg verlaufenden Aufnahmebohrung 34 unterbrochen ist. In diese Bohrung ist die Hülse 16 bündig eingepaßt, die eine in bezug auf die Längsachse 33 nicht geneigte Durchgangsbohrung aufweist, in der die Exzenterhülse 11 eingelegt ist. An ihrem Ende weist die Hülse 16 einen in bezug auf die Längsachse 33 und in Richtung ihrer Durchgangsbohrung radial symmetrisch verlaufenden Kragen auf, der ein Außengewinde 35 trägt. Ein auf oder innerhalb der Wandung 32 angeordnetes Spannelement 36 besitzt ein der Hülse 11 zugewandtes Sackloch, in welches ein zur Wandung 32 offenes Innengewinde 37 eingeschnitten ist, in das das Außengewinde 35 der Hülse 16 schraubbar ist. Das Spannelement 36, welches relativ zur Wandung 32 fixiert oder bewegt werden kann, ist glockenförmig ausgebildet und weist zentrisch in bezug zum Innengewinde 37 ein glattes Durchgangsloch auf, durch welches ein Spannelement in Form eines Gewindebolzens 38 steckbar ist. Die Hülse 16 weist zentrisch auf der dem Spannelement 36 zugewandten Ende eine Gewindebohrung auf, in die der Gewindeschaft des Gewindebolzens 38 schraubbar ist.

Um die Radialverschiebung der Hülse 11 vorzunehmen, wird die Schraube 38 gelöst und das auf der Außenseite der Wandung 32 aufliegende glockenförmige Spannelement 36 verdreht. Beim Verdrehen des Spannelementes 36 wird die in die schräg verlaufende Aufnahmebohrung 34 eingepaßte Hülse 16 gehoben bzw. gesenkt und dabei die Exzenterhülse 11 radial verschoben. Durch Verdrehen der Exzenterhülse selbst kann noch eine weitere Feineinstellung in einer radialen Richtung vorgenommen werden, die etwa orthogonal auf der radialen Einstellrichtung liegt, die mittels der Hülse 16 erzielbar ist.

Mit der erfindungsgemäßen Vorrichtung kann beispielsweise eine Feinjustierung eines Walzenspaltes zwischen zwei nebeneinander angeordneten Walzen ebenso ermöglicht werden wie die Feineinstellung eines hochbelasteten Werkzeuges, insbesondere eines Hartmetallvollbohrers oder einer Welle, einer Walze oder eines Zapfens innerhalb einer Zapfenhalterung.

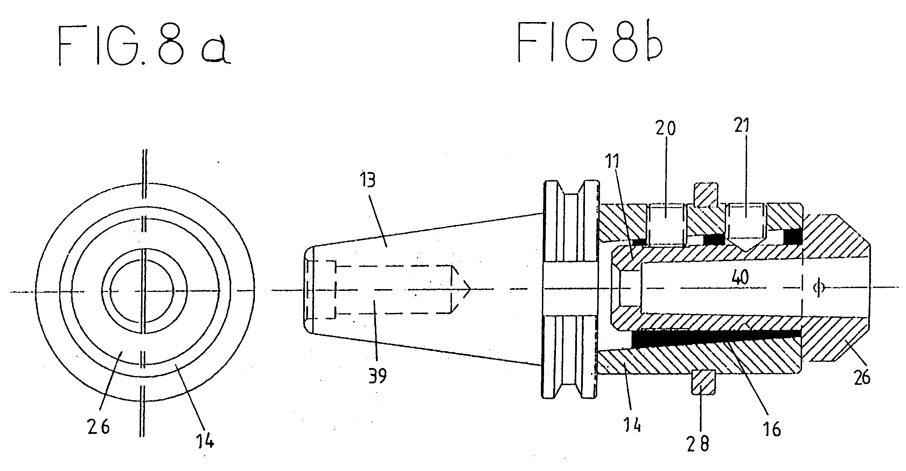

Eine weitere Ausführungsform zeigt Fig. 8a, b, in denen gleiche Teile mit gleichen Bezugszeichen, wie zuvor beschrieben, bezeichnet sind. In der Zeichnung ist zusätzlich noch die Spannbohrung 39 für einen Anzugsbolzen dargestellt. Die Aufnahmebohrung der Exzenterhülse 11 ist mit 40 bezeichnet.

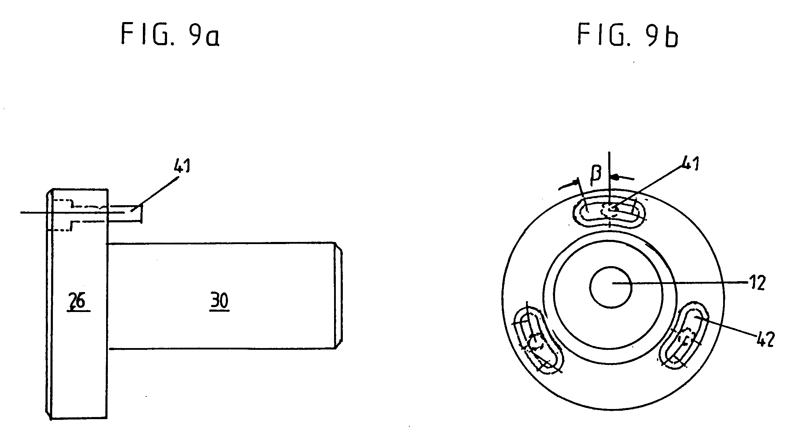

Wie aus Fig. 9a und 9b ersichtlich, kann die Exzenterhülse 11 auch axial mit einem Werkzeughalter verspannt werden. Hierzu dienen Spannschrauben 41, die in Durchbrechungen 42 des Morsekegels 26 vorgesehen sind. Diese Durchbrechungen 42 besitzen eine gebogene Oval- bzw. Nierenform, so daß die Exzenterhülse um ihre Längsachse nach jeder Seite um den Winkel β verschwenkbar ist. Die Gewindeschraube 41 wird in einer Gewindebohrung befestigt, die vertikal zur Plananlage 24 liegt.

## Patentansprüche

1. Vorrichtung mit einem in einem Halter (10, 32) eingespannten und radial verschieblichen Zapfen oder Schaft (12), insbesondere Schaft (12) eines Werkzeuges oder Werkzeugträgers in einem Werkzeughalter oder eines Lagerzapfens in eine Wandung (32), die in bezug auf die Längsachse (18,33) der Vorrichtung eine schräg verlaufende Aufnahmebohrung (15, 34) aufweist, in der eine angepaßte Hülse (16) axial verschiebbar sitzt, deren Außenmantelfläche gleichermaßen schräg verläuft und deren Innenmantelfläche in Form einer Aufnahmebohrung für den Schaft (12) oder Lagerzapfen parallel zur Längsachse (18, 33) der Vorrichtung angeordnet ist, wobei die axiale Verstellung der Hülse (16) eine radiale Verstellung des Schaftes (12) oder Zapfens und somit des Werkzeuges oder Werkzeugträgers ermöglicht und von außen als Klemm- oder Schraubverbindung (19, 20, 21, 38) ausgebildete Spannelemente innerhalb des Halters vorgesehen sind, über die der Schaft oder der Zapfen (12) oder die Hülse (16) arretierbar sind, wobei der Halter im Bereich der Mündung der Aufnahmebohrung (15) stirnseitig eine umlaufende Plananlage (24) aufweist, die sich senkrecht zur Längsachse (18, 33) der Vorrichtung radial erstreckt, und wobei die Länge der Hülse (16) um ein der gewünschten axialen Verschiebung entsprechendes Maß kleiner als die Tiefe der Aufnahmebohrung (15) ist, so daß die Hülse (16) im Kalter (10) ohne axiale Verstellung des eingespanntes Teiles verstellbar ist,
**dadurch gekennzeichnet**,
daß in der Hülse (16) eine Exzenterhülse (11) mit einem zylindrischen Außenmantel und mit einer exzentrisch angeordneten Bohrung (31) zur Aufnahme des Schaftes (12) oder Lagerzapfens angeordnet ist.

2. Vorrichtung nach Anspruch 1, dadurch gekennzeichnet, daß die Exzenterhülse (11) an ihrem vorderen Ende einen Morsekegel (26) trägt, dessen rückwärtige Ringbundfläche (25) plan auf der ringförmigen Plananlage (24) im Bereich der Mündung der Aufnahmebohrung (15) aufliegt.

3. Vorrichtung nach Anspruch 1 oder 2, dadurch gekennzeichnet, daß die Bohrung (31) der Exzenterhülse bis zu 3/10 mm, vorzugsweise um 5/100 mm, gegen die Exzenterhülsenachse versetzt ist.

4. Vorrichtung nach einem der Ansprüche 1 bis 3, dadurch gekennzeichnet, daß die Bohrung (31) der Exzenterhülse (11) konisch oder zylindrisch ausgebildet ist.

5. Vorrichtung nach einem der Ansprüche 1 bis 4, dadurch gekennzeichnet, daß die Exzenterhülse (11) an ihrem Außenmantel (30) eine Ringnut (22) aufweist, in die eine Spannschraube (21) oder deren kegelförmige Spitze eingreift und die Exzenterhülse (11) mit dem Halter (10) verspannt, wobei die Spannschraube (21) in einer Gewindebohrung (19) des Halters (10) geführt ist, oder daß der Morsekegel (26) der Exzenterhülse (11) mindestens eine axiale Durchbrechung (42), vorzugsweise mehrere äquidistante Durchbrechungen (42) zum Durchgriff einer Spannschraube (41) aufweist, die in einer Gewindebohrung des Halters (10) geführt ist, die senkrecht zu dessen ringförmiger Plananlage (24) angeordnet ist.

6. Vorrichtung nach einem der Ansprüche 1 bis 5, dadurch gekennzeichnet, daß die Exzenterhülse (11) mindestens eine radiale durch ihren Mantel oder axial durch den Morsekegel (26) reichende Gewindebohrung aufweist, in der eine Spannschraube zum Verspannen des in die Exzenterhülse (11) eingespannten Schaftes (12) oder des Lagerzapfens geführt ist.

7. Vorrichtung nach einem der Ansprüche 1 bis 6, dadurch gekennzeichnet, daß die Hülse (16) endseitig in Richtung der Längsachse (33) der Vorrichtung ein Außengewinde (35) aufweist, daß in ein Innengewinde (37) einer relativ zur Aufnahmebohrung (34) axial fixierbaren Verstellmutter (36) eingreift.

8. Vorrichtung nach Anspruch 7, dadurch gekennzeichnet, daß die Verstellmutter als Glocke (36) ausgebildet ist, die mittig von einer Spannschraube (38) durchgriffen ist, deren Gewindeschaft in eine zentrische Gewindebohrung der Exzenterhülse (11) zu deren Fixierung eingreift, dergestalt, daß der Flansch der Exzenterhülse (11) auf die Planauflage der Wandung (32) aufzupressen imstande ist.

## Claims

1. Device with a radially movable pin or shaft (12) clamped in a holder (10, 32), in particular the shank (12) of a tool or tool support in a tool holder or of a bearing journal into a wall (32), which has a receiving hole (15, 34) running obliquely in relation to the longitudinal axis (18, 33) of the device, in which an adapted sleeve (16) sits to be axially displaceable, its external shell surface running obliquely in the same manner and its internal shell surface in the form of a receiving hole for the shank (12) or bearing journal being arranged parallel to the longitudinal axis (18, 33) of the device, wherein the axial displacement of the sleeve (16) enables a radial displacement of the shank (12) or journal and thus of the tool or tool support, and clamping elements constructed from the outside as a clamping or screw joint (19, 20, 21, 38) are provided inside the holder, by means of which clamping elements the shank or journal (12) or sleeve (16) may be locked in position, wherein in the region of the mouth of the receiving hole (15) on the face side, the holder has a circumferential plane abutment (24) which extends radially perpendicular to the longitudinal axis (18, 33) of the device, and wherein the length of the sleeve (16) is shorter than the depth of the receiving hole (15) by an amount corresponding to the desired axial displacement, so that the sleeve (16) is displaceable in the holder (10) without axial displacement of the clamped part, characterised in that an eccentric sleeve (11) with a cylindrical external shell and with an eccentrically arranged hole (31) is arranged in the sleeve (16) to receive the shank (12) or bearing journal.

2. Device according to Claim 1, characterised in that at its front end, the eccentric sleeve (11) has a Morse cone (26), the rear annular collar surface (25) of which lies flat on the ring-shaped plane abutment (24) in the region of the mouth of the receiving hole (15).

3. Device according to Claim 1 or 2, characterised in that the hole (31) of the eccentric sleeve is arranged offset relative to the eccentric sleeve axis by up to 3/10 mm, preferably by 5/100 mm.

4. Device according to one of Claims 1 to 3,
characterised in that the hole (31) of the eccentric sleeve (11) is of conical or cylindrical construction.

5. Device according to one of Claims 1 to 4,
characterised in that the eccentric sleeve (11) has an annular groove (22) on its external shell (30) into which a clamp bolt (21) or its conical tip engages and clamps the eccentric sleeve (11) to the holder (10), said clamp bolt (21) being disposed in a threaded hole (19) of the holder (10), or that the Morse cone (26) of the eccentric sleeve (11) has at least one axial opening (42), preferably several equidistant openings (42), for a respective clamp bolt (21) to engage through, said clamp bolt (41) being disposed in a threaded hole of the holder (10) arranged perpendicular to the ring-shaped plane abutment (24) of said holder.

6. Device according to one of Claims 1 to 5,
characterised in that the eccentric sleeve (11) has at least one threaded hole passing radially through its shell or axially through the Morse cone (26), and in said threaded hole a clamp bolt is disposed for clamping in position the shank (12) clamped into the eccentric sleeve (11) or the bearing journal.

7. Device according to one of Claims 1 to 6,
characterised in that on its end in the direction of the longitudinal axis (33) of the device, the sleeve (16) has an external thread (35) which engages into an internal thread (37) of an adjusting nut (36) which may be fixed axially relative to the receiving hole (34).

8. Device according to Claim 7, characterised in that the adjusting nut is constructed in a bell shape (36) with a clamp bolt (38) engaging centrally through it, the threaded shaft of which engaging into a central threaded hole of the eccentric sleeve (11) to secure it so that the flange of the eccentric sleeve (11) is able to press onto the plane abutment of the wall (32).

## Revendications

1. Dispositif comportant, maintenu dans un support (10, 32), un tenon ou une tige (12) radialement déplaçable, en particulier la tige (12) d'un outil ou d'un support-outil dans un porte-outil ou d'un tourillon dans une paroi (32) qui, par rapport à l'axe longitudinal (18, 33) du dispositif, présente un alésage de logement (15, 34) s'étendant de manière oblique, dans lequel une douille adaptée (16) est positionnée de manière à être axialement déplaçable, dont la surface latérale extérieure s'étend obliquement de la même manière et dont la surface latérale intérieure est, sous forme d'un alésage de logement pour la tige (12) ou le tourillon, disposée parallélement à l'axe longitudinal (18, 33) du dispositif, le déplacement axial de la douille (16) permettant un déplacement radial de la tige (12) ou du tenon et ainsi de l'outil ou du support-outil, et des éléments de serrage réalisés, de dehors, en tant que jonction par serrage ou assemblage par vis (19, 20, 21, 38) étant prévus à l'intérieur du support, par l'intermédiaire desquels la tige ou le tenon (12) ou la douille (16) peuvent être arrêtés, le support présentant dans la zone de la bouche de l'alésage de logement (15), sur la face, un aboutement plan circonférentiel (24) qui s'étend de façon radiale perpendiculaire à l'axe longitudinal (18, 33) du dispositif, et la longueur de la douille (16) étant plus petite d'une mesure correspondant au déplacement axial souhaité que la profondeur de l'alésage de logement (15) de sorte que la douille (16) soit déplaçable dans le support (10) sans devoir effectuer un déplacement axial de la pièce serrée,
**caractérisé par le fait**
qu'une douille excentrique (11) présentant une nappe extérieure cylindrique ainsi qu'un trou (31) disposé de manière excentrique est disposée dans la douille (16) afin de recevoir la tige (12) ou le tourillon.

2. Dispositif selon la revendication 1, caractérisé par le fait que la douille excentrique (11) porte, à son extrémité avant, un cône Morse (26) dont la surface de collet annulaire (25) arrière repose de manière plane sur l'aboutement plan annulaire (24) dans la zone de la bouche de l'alésage de logement (15).

3. Dispositif selon la revendication 1 ou 2, caractérisé par le fait que le trou (31) de la douille excentrique (11) est décalé jusqu'à 3/10 mm, de préférence de 5/100 mm, par rapport à l'axe de la douille excentrique.

4. Dispositif selon l'une des revendications 1 à 3, caractérisé par le fait que le trou (31) de la douille excentrique (11) est réalisé de manière conique ou cylindrique.

5. Dispositif selon l'une des revendications 1 à 4, caractérisé par le fait que la douille excentrique (11) présente, sur sa nappe extérieure (30), une rainure annulaire (22) dans laquelle engrène une vis de serrage (21) ou sa pointe conique en serrant ainsi la douille excentrique (11) avec le support (10), la vis de serrage (21) étant guidée dans un trou taraudé (19) du support (10), ou que le cône Morse (26) de la douille excentrique (11) présente un perçage axial (42) du moins, de préférence plusieurs perçages équidistants (42) destinés à être traversés par une vis de serrage (21) qui est guidée dans un trou taraudé du support (10), qui est disposé verticalement à l'aboutement plan annulaire (24) dudit support.

6. Dispositif selon l'une des revendications 1 à 5, caractérisé par le fait que la douille excentrique (11) présente un trou taraudé du moins qui s'étend radialement au travers de la nappe de celle-ci ou axialement à travers le cône Morse (26), et dans ledit trou taraudé est guidée une vis de serrage destinée à serrer la tige serrée dans la douille excentrique (11), ou le tourillon.

7. Dispositif selon l'une des revendications 1 à 6, caractérisé par le fait que la douille (16) présente à son extrémité, en direction de l'axe longitudinal (33) du dispositif, un filet extérieur (35) qui engrène dans un filet intérieur (37) d'un écrou de réglage (36) qui, relatif à l'alésage de logement (34), est fixable de manière axiale.

8. Dispositif selon la revendication 7, caractérisé par le fait que l'écrou de réglagle est réalisé en tant que gloche (36) qui est traversée au centre par une vis de serrage (38) dont la tige fileté engrène dans un trou taraudé central de la douille excentrique (11) pour sa fixation, à savoir de telle manière que la bride de la douille excentrique (11) peut être pressée sur l'aboutement plan de la paroi (32).
